# EUROPÄISCHE PATENTSCHRIFT

(11) **EP 3 296 577 B1**
(45) Veröffentlichungstag und Bekanntmachung des Hinweises auf die Patenterteilung: **05.01.2022**
(21) Anmeldenummer: 17189887.7
(22) Anmeldetag: 07.09.2017
(51) Int. Cl.: B23P 19/06, F16B 11/00, F16B 27/00

(54) **FUNKTIONSELEMENT**
FUNCTION ELEMENT
ÉLÉMENT FONCTIONNEL

(30) Priorität: 15.09.2016 DE 102016117418
(43) Veröffentlichungstag der Anmeldung: 21.03.2018
(73) Patentinhaber: Profil Verbindungstechnik GmbH & Co. KG, 61381 Friedrichsdorf (DE)
(72) Erfinder: DIEHL, Oliver, 61250 Usingen (DE); HUMPERT, Richard, 61231 Bad Nauheim (DE)
(74) Vertreter: Manitz Finsterwald Patent- und Rechtsanwaltspartnerschaft mbB

(56) Entgegenhaltungen:
- EP-A1- 0 650 783
- EP-A2- 2 439 055
- EP-B1- 0 633 825
- DE-A1- 19 935 853
- US-A- 4 853 075

## Beschreibung

Die vorliegende Erfindung betrifft eine Vorrichtung und ein Verfahren zur Anbringung von Funktionselementen, z.B. aus Metall an einem Bauteil, insbesondere an einem aus faserverstärktem Kunststoff bestehenden Bauteil, unter Anwendung eines Setzkopfes, wobei das Funktionselement eine mit Klebstoff versehene Anlagefläche aufweist, und der Klebstoff in einzelnen den Funktionselementen ange-passten Depots auf einem Trägerband dem Setzkopf zuführbar ist, wobei eine bewegliche Einrichtung die mit Klebstoff versehenen Funktionselemente vom Trägerband übernimmt und auf einer Führungsschiene dem Setzkopf zuspeist.

Eine Vorrichtung bzw. ein Verfahren der oben genannten Art ist der EP-2 439 055-A zu entnehmen. Dort wird schematisch dargestellt, wie Klebstoffringe mittels einer Transfereinrichtung von einem ersten Trägerband entnommen und auf ein zweites umlaufendes Band abgelegt werden. Funktionselemente werden anschließend je mit einem auf dem umlaufenden Band abgelegten Klebstoffring in Verbindung gebracht und in einer Setzeinrichtung hineintransportiert. Die Funktionselemente werden von dem umlaufenden Trägerband abgeknöpft, wenn sich dieses um eine Umlenkrolle bewegt und anschließend an ein Kunststoffbauteil angebracht. Die schematische Darstellung geht nicht ins Detail, es wird lediglich gesagt, dass die bewegliche Einrichtung durch einen Finger oder Halter gebildet ist. Das Trägerband dient als Speicher für die Funktionselemente, die demgemäß relativ lange in Berührung mit dem Klebstoff bleiben und die Vorrichtung ist relativ aufwendig.

Funktionselemente aus Metall mit einem eine Anbringungsfläche bildenden Flansch größeren Durchmessers und einem innerhalb der Anbringungsfläche angeordneten und sich vom Flansch weg erstreckenden Zentrierabschnitt sind zur Verwendung mit metallischen Bauteilen, wie Blechteilen, weit verbreitet und gut bekannt. Ein Beispiel ist der europäischen Patentschrift EP 1 116 891 der vorliegenden Anmelderin zu entnehmen, die eine sogenannte RND-Mutter beschreibt. Das heißt, das Funktionselement ist in der genannten europäischen Patentschrift als Mutterelement ausgebildet. Dort ist der Zentrierabschnitt als Nietabschnitt ausgebildet, der nach bzw. bei der Anbringung verformt wird, um ein Nietbördel zu bilden.

Im Zuge der Bestrebung nach Formteilen geringen Gewichts, jedoch hoher Festigkeit, werden heutzutage anstelle von Blechteilen häufig Kunststoffbauteile benutzt, vornehmlich in Form von Verbundwerkstoffen, wie beispielsweise mit glasfaser- oder kohlenfaserverstärkten Kunststoffen, wobei allerdings auch andere Verstärkungsmaterialien in Frage kommen, üblicherweise solche mit hochfesten Verstärkungsfasern oder aus solchen Fasern hergestellten Geweben. Auch Bauteile aus solchen Kunststoffen müssen häufig mit Befestigungselementen versehen werden, wofür eine beschränkte Auswahl von Möglichkeiten bereits bekannt ist. In diesem Zusammenhang sind beispielsweise Einpresselemente bekannt, die in angepasste Bohrungen des Kunststoffmaterials üblicherweise bei erhöhten Temperaturen des Materials eingepresst werden. Das Kunststoffmaterial fließt um die Einsätze bzw. Einpresselemente herum und in dort vorgesehene Hinterschneidungen und verankert die Einsätze in kaltem Zustand. Die Einsätze können beispielsweise mit einem Innengewinde versehen werden. Solche Einsätze haben zwar durchaus ihre Berechtigung, sind aber meistens nur beschränkt belastbar, da sie sonst in das Kunststoffteil hinein- oder aus dem Kunststoffbauteil herausgezogen werden können. Die Verwendung von solchen Einsätzen ist bei relativ dünnen Kunststoffbauteilen besonders problematisch. Solche faserverstärkten Kunststoffbauteile oder ein mit einem Gewebe verstärktes Kunststoffbauteil werden häufig als Organobleche bezeichnet.

Aus der eingangs genannten EP-2 439 055-A ist es bekannt, ein Funktionselement ähnlich eines RND-Elements mit einem Klebstoffring zu versehen, um dieses an ein Bauteil, z.B. an ein Kunststoffbauteil, insbesondere an ein faserverstärktes Kunststoffbauteil oder an ein mit einem Gewebe verstärktes Kunststoffbauteil anzukleben. Das Mutterelement gemäß der EP-2 439 055-A ist zwar als Zentrierelement ausgebildet, der dort gezeigte Zentrierabschnitt könnte allerdings auch als Nietabschnitt ausgebildet werden, wobei das Funktionselement dann nicht nur mit dem Bauteil verklebt wird, sondern auch durch Umbördelung des Nietabschnitts am Bauteil zusätzlich befestigbar wäre.

Es geht bei der vorliegenden Erfindung um die Anbringung des Klebstoffs an das Funktionselement und die hier beanspruchte Vorrichtung bzw. das hier beanspruchte Verfahren kann im Prinzip mit allen Arten von Befestigungselementen verwendet werden.

Funktionselemente können durchaus auch andere Formen haben. Beispielsweise kann ein Bolzenelement anstelle eines Gewindes einen zylindrischen Schaftteil aufweisen, der zur Lagerung eines Hebels, einer Seilrolle oder eines anderen Bauteils dienen kann. Auch ein hohles Element, ähnlich einem Mutterelement, kommt in Frage, bei dem anstelle eines Gewindezylinders eine glatte Bohrung vorgesehen ist, die zur Lagerung einer Welle dient. Es sind ferner Funktionselemente bekannt, die zur Aufnahme eines eingesteckten Stiftes oder eines Clips ausgebildet sein können. Erfindungsgemäße Funktionselemente können auch zur Ausübung der entsprechenden Funktionen ausgebildet werden.

Das Vorsehen von Klebstoff an Funktionselementen kann sich als problematisch gestalten. Selbst wenn der Klebstoff geschützt am Funktionselement untergebracht ist oder in einer trockenen Form vorliegt, beispielsweise in kleinen vermischten Kapseln aus Klebstoff und Härter verwendet wird, die erst unter Druck platzen und einen aktivierten unter Druck oder anderweitig aushärtenden Klebstoff bilden, besteht immer die Gefahr, dass der Klebstoff während der Handhabung der Funktionselemente oder während des Transports von einer Arbeitsstätte zu einer anderen beschädigt wird oder gar verloren geht. Diese Gefahr besteht auch dann, wenn der Klebstoff in Form von Ringen aus doppelseitigem Klebeband besteht.

Aufgabe der vorliegenden Erfindung ist es eine Vorrichtung und ein Verfahren vorzusehen, die bzw. das die oben bezeichnete Problematik der Beschädigung oder den Verlust des Klebstoffs weitestgehend verhindert.

Zur Lösung dieser Aufgaben wird erfindungsgemäß eine Vorrichtung der eingangs genannten Art vorgesehen, die sich dadurch auszeichnet, dass die Funktionselemente mittels der beweglichen Einrichtung von einer vor dem Setzkopf angeordneten Führungseinrichtung übernommen und jeweils an einem vom Trägerband getragenen Klebstoffdepot druckbar sind und anschließend mit den anhaftenden Klebstoffdepots mittels der beweglichen Einrichtung und getrennt vom Trägerband auf der in einem Mundstück des Setzkopfes gebildeten Führungsschiene dem Setzkopf zu einer Setzposition vor einen Setzstempel zuführbar sind, und dass die bewegliche Einrichtung entweder durch ein drehbares Rad (34) mit Aufnahmen für die Funktionselemente gebildet ist, das die Funktionselemente unmittelbar von der Führungseinrichtung übernimmt, an die vom Trägerband getragenen Klebstoffdepots drückt und unmittelbar auf die Führungsschiene des Mundstücks fördert, oder dass die Führungseinrichtung einen umlaufenden Förderer mit Aufnahmen für die Funktionselemente umfasst, der die Funktionselemente unmittelbar von der Führungseinrichtung übernimmt, an die vom Trägerband getragenen Klebstoffdepots drückt und unmittelbar auf die Führungsschiene des Mundstücks fördert.

Ein entsprechendes Verfahren ist dem Anspruch 12 zu entnehmen. Wenn in dieser Anmeldung von Funktionselementen z.B. aus Metall die Rede ist, soll zum Ausdruck gebracht werden, dass die Funktionselemente üblicherweise nur aus Metall bestehen. Es ist allerdings nicht ausgeschlossen, dass ein Funktionselement aus faserverstärktem Kunststoff zur Anwendung gelangt, wobei es auch denkbar wäre, ein solches Funktionselement mit einem metallischen Kern auszustatten, zum Beispiel nach Art eines Gewindeeinsatzes.

Dadurch, dass der Klebstoff erst innerhalb des Setzkopfes oder unmittelbar vor dem Eintritt in den Setzkopf auf die Funktionselemente aufgebracht wird, ist die Gefahr, dass der Klebstoff vor dem Erreichen des Setzkopfes beschädigt oder verloren geht oder anderweitig beeinträchtigt wird, zum Beispiel durch Alterung, nicht mehr vorhanden.

Im Vergleich zu der Lösung gemäß der eingangs genannten EP-2 439 055-A, kann die Strecke, über die die mit Klebstoffringen vorgesehenen Funktionselemente transportiert werden, deutlich kürzer ausgebildet werden , so dass die genannte Gefahr noch weiter herabgesetzt wird. Ferner ist die mechanische Lösung deutlich einfacher, es wird nur ein Trägerband vorgesehen, das die Klebstoffdepots bzw.-ringe trägt und diese unmittelbar der Führungseinrichtung zuführt.

Die erfindungsgemäße Vorrichtung wird insbesondere und gemäß Anspruch 1 ausgebildet, dass die Führungseinrichtung ein drehbares Rad mit Aufnahmen für die Funktionselemente umfasst, das die Funktionselemente von einer Führungsbahn einer Zuführeinrichtung übernimmt.

Dies stellt eine sehr kompakte Lösung dar, die zuverlässig arbeitet und eine qualitativ hochwertige Übergabe der Funktionselemente an den Setzkopf mit einer sehr kurzen Zuführstrecke realisiert.

Dies ist allerdings nicht die einzige mögliche Realisierung der Führungseinrichtung. Diese kann gemäß Anspruch 1 alternativ durch einen umlaufenden Förderer mit Aufnahmen für die Funktionselemente realisiert werden, der die Funktionselemente von einer Führungsbahn einer Zuführeinrichtung übernimmt. In einem solchen Fall tritt eine Umlenkwalze des umlaufenden Förderers anstelle des drehbaren Rades und die Aufnahmen für die Funktionselemente befinden sich im umlaufenden Förderband und ggf. auch in der Umlaufwalze. Der umlaufende Förderer könnte sich dann senkrecht oder schräg nach oben von der Umlaufwalze weg erstrecken.

Die Zuführeinrichtung bzw. deren Führungsbahn kann in an sich bekannter Weise durch einen Führungskanal oder durch einen Führungsschlauch oder durch eine Führungsschiene gebildet sein. Bei einer solchen Ausbildung werden die Funktionselemente aneinandergereiht der Führungseinrichtung zugeführt. Dadurch dass Formmerkmale der Funktionselemente in Aufnahmen des drehbaren Rades bzw. des umlaufenden Förderers eingreifen, kann der auf die Funktionselemente ausgeübte Druck ausreichen, um das drehbare Rad zu drehen oder das umlaufende Förderband umlaufen zu lassen. D.h. ein separater Antrieb für das drehbare Rad bzw. den umlaufenden Förderer ist nicht erforderlich. Es ist allerdings durchaus möglich, das drehbare Rad bzw. den umlaufenden Förderer mittels eines Schrittmotors entsprechend den Huben des Setzkopfes anzutreiben.

Wie angedeutet ist das Trägerband mit den Klebstoffdepots vor dem Setzkopf mit einem vom Klebstoff abziehbaren Abdeckband abgedeckt. Die Klebstoffdepots sind dementsprechend gut geschützt, solange sie noch abgedeckt sind.

Das Abdeckband ist vorzugsweise über eine Umlenkrolle vom Trägerband trennbar, wodurch eine saubere Trennung in Form einer Abschälbewegung erreichbar ist.

Dabei ist die Anordnung vorzugsweise so, dass die Umlenkrolle oberhalb des Trägerbandes, aber unterhalb einer die Funktionselemente zur Führungseinrichtung führenden Zuführeinrichtung und auf der Einlaufseite eines die Führungseinrichtung aufweisenden bzw. umfassenden Mundstücks angeordnet ist. Dies ermöglicht ebenfalls eine sehr kompakte und gut geschützte Anordnung mit einer sehr kurzen Wegstrecke der mit Klebstoff versehenen Elemente.

Bei dieser Anordnung wird das Trägerband vorzugsweise nach unten um eine Umlenkrolle abgeführt, die sich in einem Ausschnitt eines die Führungseinrichtung aufweisenden Mundstücks befindet und vorzugsweise so angeordnet ist, dass die Funktionselemente tangential zur Oberfläche der Umlenkrolle des Trägerbands unmittelbar auf einer Führungsschiene des Mundstücks bewegbar sind. Dabei kann diese Bewegung durch das drehbare Rad bzw. einen umlaufenden Förderer bewerkstelligt werden, das bzw. der einerseits die Bewegung der Funktionselemente entsprechend den Setzhüben des Setzkopfes taktet bzw. takten kann und andererseits die genannte tangentiale Übergabe der Funktionselemente bewerkstelligt und dabei die Freigabe der Funktionselemente aus den einzelnen Aufnahmen des drehbaren Rades bzw. dem umlaufenden Förderer bei deren Umlenkung unmittelbar oberhalb der Umlenkrolle des Trägerbandes verursacht.

Es leuchtet ein, dass die Klebstoffdepots und/oder das Trägerband derart ausgebildet ist bzw. sind, dass die Klebstoffdepots weniger stark an dem Trägerband als an den Funktionselementen haften. Dies kann zum Beispiel dadurch bewerkstelligt werden, dass das Trägerband aus mit Fasern oder Gewebe verstärkten Silikonen besteht oder eine Oberfläche aufweist, die gut gleitet und nicht haftet, zum Beispiel mit einer PTFE-beschichtung versehen ist. Als Alternative oder zusätzlich dazu kann die Oberfläche des Klebstoffringes, die auf dem Trägerband sitzt weniger klebrig ausgeführt werden als die Oberfläche, die an den Funktionselementen haften soll.

Die Integration der Führungseinrichtung in das Mundstück hat den besonderen Vorteil, dass es mit dem Mundstück vom Setzkopf gelöst werden kann. Dabei ist das Mundstück der Führungseinrichtung vorzugsweise mittels einer bewegbaren Rastnase lösbar mit dem Setzkopf verbunden. Es ist somit leicht lösbar mit dem Setzkopf verbunden.

Die Vorrichtung ist vorzugsweise so ausgelegt, um nach der Anbringung des Klebstoffs auf ein Funktionselement dieses entweder sofort in den Stempelkanal des Setzkopfes hineinzuschieben oder erst in eine Warteposition vor dem Stempelkanal zu bringen. In beiden Varianten kann die Kette von Funktionselementen nur dann um einen Schritt weitergeschoben werden, d.h. das drehbare Rad um eine Aufnahmeteilung weitergedreht oder die Aufnahmen des umlaufenden Förderers weiterbewegt werden, wenn der Setzkopf öffnet und die Einführung eines neuen Funktionselementes in die Setzposition unterhalb des Setzstempels zulässt.

Da die sich in der Führungseinrichtung befindlichen Funktionselemente einander berühren, ist ein sicherer Transport in die Setzposition stets gewährleistet.

Es kann ggf. ein Spülsystem im Setzkopf integriert werden, um Klebstoffreste die im Lauf der Zeit sich im Setzkopf ansammeln bei Bedarf aus dem Setzkopf auszuspülen.

Die Anbringung der Funktionselemente in Kunststoffbauteile mittels eines Setzkopfes kann mit vielen verschiedenen Vorrichtungen erfolgen. Denkbar ist es, den Setzkopf in einer Presse zu verwenden. Hier kann der Setzkopf, auf dem das Bauteil angeordnet ist, nach oben weisend in einem unteren Werkzeug der Presse oder in einer Zwischenplatte der Presse angeordnet und das Funktionselement mittels des Setzkopfs von unten auf das Kunststoffbauteil gedrückt werden, und zwar gegen eine Matrize, die in einer Zwischenplatte der Presse bzw. einem oberen Werkzeug der Presse gehalten wird. Dabei kann das Bauteil in an sich bekannter Weise vorgelocht oder das Funktionselement selbststanzend in das Bauteil eingebracht werden.

Die Anordnung mit dem Setzkopf nach oben weisend bedeutet gleichzeitig, dass die Anlagefläche des Funktionselement nach oben weist. Dies ist deshalb bevorzugt, da der Klebstoff zumindest im Wesentlichen verlustfrei auf den Funktionselementen innerhalb des Setzkopfes transportiert wird.

Nichtsdestotrotz ist es auch denkbar, den Setzkopf nach unten weisend in einer Zwischenplatte der Presse oder im oberem Werkzeug der Presse anzuordnen und die Matrize dann im unteren Werkzeug der Presse oder in der Zwischenplatte der Presse vorzusehen, die das Bauteil von der Unterseite abstützt.

Für jeden Hub der Presse können dann ein Funktionselement oder mehrere Funktionselemente gleichzeitig an das Kunststoffbauteil angebracht werden. Die Presse kann dann so eingestellt werden, dass sie einerseits nur auf das Maß schließt, das erforderlich ist, um das Funktionselement erfindungsgemäß an das Kunststoffbauteil anzubringen und andererseits einen ausreichenden Druck auf den Klebstoff auszuüben, um die Klebefunktion sicherzustellen.

Eine andere Möglichkeit besteht darin, mittels eines Roboters Funktionselemente in das Kunststoffbauteil einzusetzen bzw. an dieses anzubringen. Der Roboter kann hier beispielsweise eine Vorrichtung ähnlich einem Setzkopf tragen, der das Element auf die eine Seite des Kunststoffbauteils drückt, während das Kunststoffbauteil auf einer Unterlage oder auf einer Matrize von oben gehalten oder von unten abgestützt wird, die ebenfalls vom Roboter getragen wird.

Ferner kann eine stationäre Einrichtung zur Halterung der Matrize verwendet und nur der Setzkopf vom Roboter betätigt werden. Auch eine umgekehrte Anordnung wäre denkbar, d.h. der Roboter drückt die Matrize auf die eine Seite eines Kunststoffbauteils, dessen andere Seite von einer Halterung gehalten wird, die beispielsweise das Funktionselement abstützt. Wenn also in dieser Schrift von oben und unten bzw. von oberhalb und unterhalb gesprochen wird, so ist dies stets auf die Darstellung in den Figuren zu verstehen und keinesfalls einschränkend auszulegen.

Außerdem ist es möglich mit einer kraftbetriebenen Zange zu arbeiten, die das Kunststoffbauteil und den Setzkopf gegeneinander presst bzw. eine Matrize von der einen Seite des Kunststoffbauteils hält und den Setzkopf von der anderen Seite auf das Kunststoffbauteil und auf die Matrize drückt.

Besonders bevorzugte Verfahren zur Lösung der erfindungsgemäßen Aufgabe sind den Ansprüchen 12 bis 14 zu entnehmen.

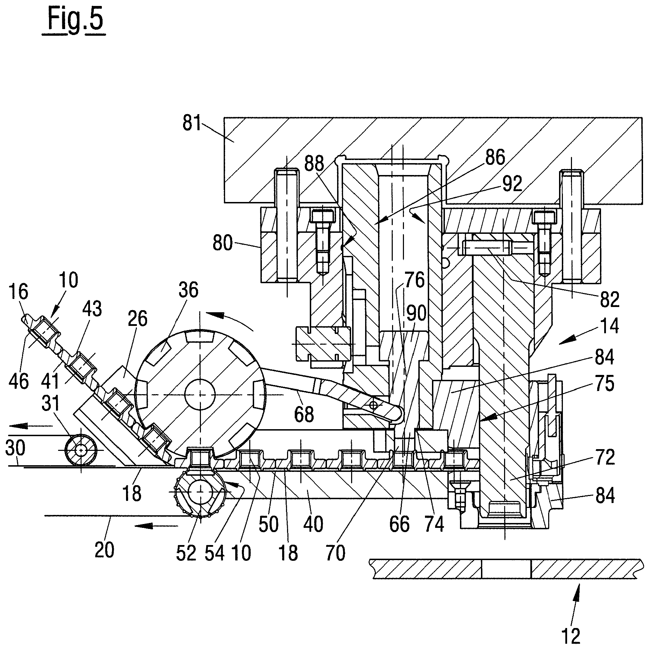

Die Erfindung wird nachfolgend anhand von Ausführungsbeispielen unter Bezugnahme auf die Zeichnungen näher erläutert, welche zeigen:
- Fig. 1: eine perspektivische Ansicht eines Trägerbandes, das zum Beispiel von einem nicht gezeigten Wickel abgezogen wird, wobei das Trägerband und die damit transportierten Klebstoff-depots bzw. Klebstoffringe von einer abziehbaren Schutzfolie abgedeckt sind,
- Fig. 2: das Trägerband der Fig.1 mit einer Kette von aneinander gereihten Funktionselementen, aus dem der Verlauf der Kette ersichtlich ist, ohne diese durch mechanische Struktur abzudecken,
Wie insbesondere aus der Fig. 5 hervorgeht, zeigen die Figuren eine Vorrichtung zur Anbringung von Funktionselementen 10, z.B. aus Metall an einem Bauteil 12 (lediglich in Fig. 5 ersichtlich), insbesondere an einem aus faserverstärkten Kunststoff bestehenden Bauteil, unter Anwendung eines Setzkopfes 14 (Fig. 5). Es könnte sich allerdings bei dem Bauteil um ein Blechteil handeln. Die Funktionselemente 10 weisen jeweils eine mit Klebstoff zu versehene Anlagefläche 16 auf.

Der Klebstoff wird in einzelnen, in der Form der Anlageflächen 16 der Funktionselemente 10, angepassten ringförmigen Depots 18 auf einem Trägerband 20 dem Setzkopf 14 zugeführt.

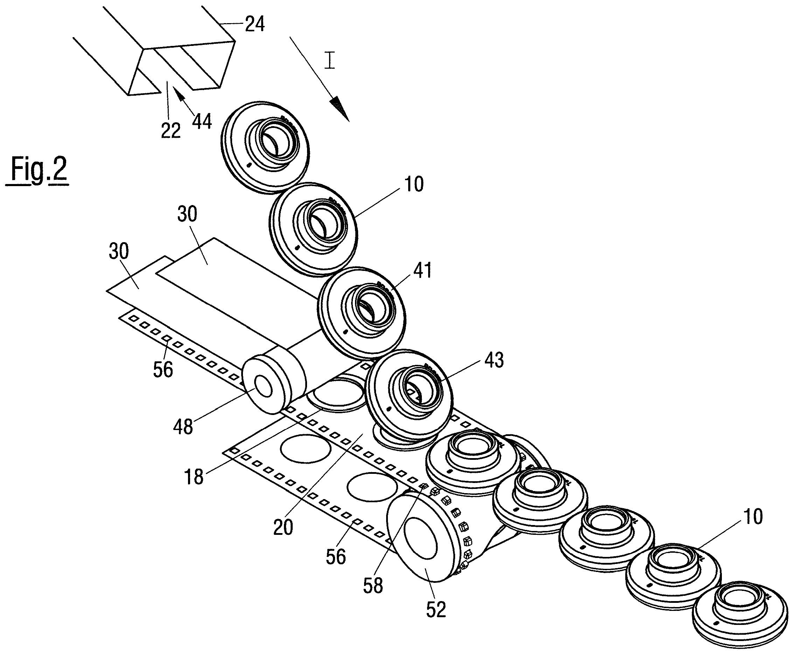

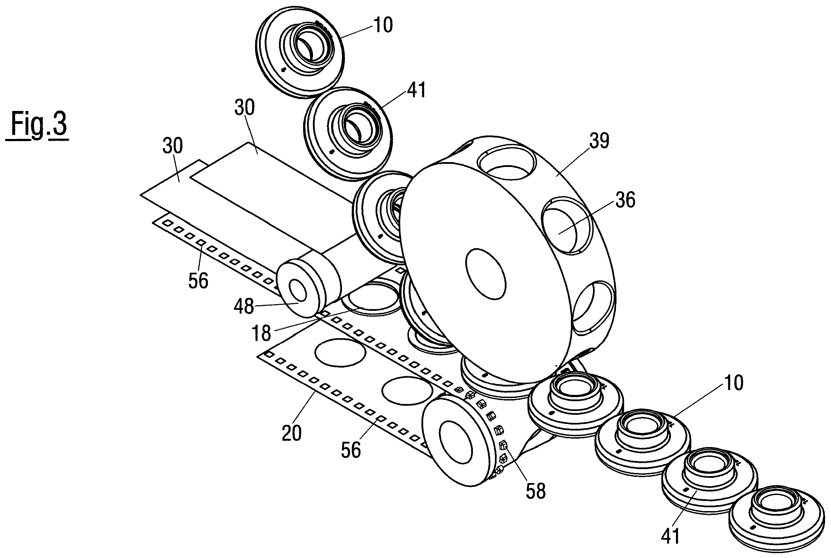

Die Funktionselemente 10 werden von einem nur abschnittsweise und rein schematischt dargestellten Führungskanal 22 einer Zuführeinrichtung 24 in Pfeilrichtung I einer Führungseinrichtung 26 (Fig. 3, 4 und 5) zugeführt, von dieser übernommen und jeweils an ein Klebstoffdepot gedrückt. Die Funktionselemente 10 werden anschließend mit den anhaftenden Klebstoffdepots 18 vom Trägerband 20
- Fig. 3: die gleiche Darstellung der Fig. 2 aber zusätzlich mit einem drehbaren Rad, das die lokale Bewegung der Funktionselemente taktet und steuert,

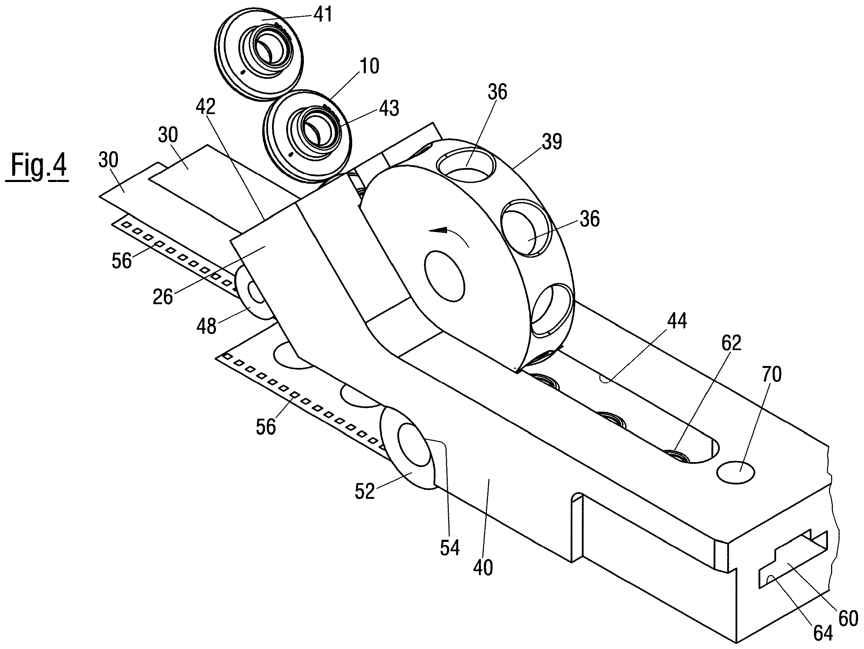

- Fig. 4: eine Darstellung entsprechend der Fig. 3, aber jetzt mit dem drehbaren Rad in ein Mundstück einer Führungseinrichtung integriert, die lösbar mit einem Setzkopf verbunden ist, und
- Fig. 5: eine detaillierte, geschnittene Darstellung der Anordnung gemäß Fig. 4, aber mit dem Mundstuck der Führungseinrichtung mit dem ebenfalls im Schnitt gezeigten Setzkopf verrastet.
getrennt und in den Setzkopf 14 zur Setzposition vor einem Setzstempel 72 geführt.

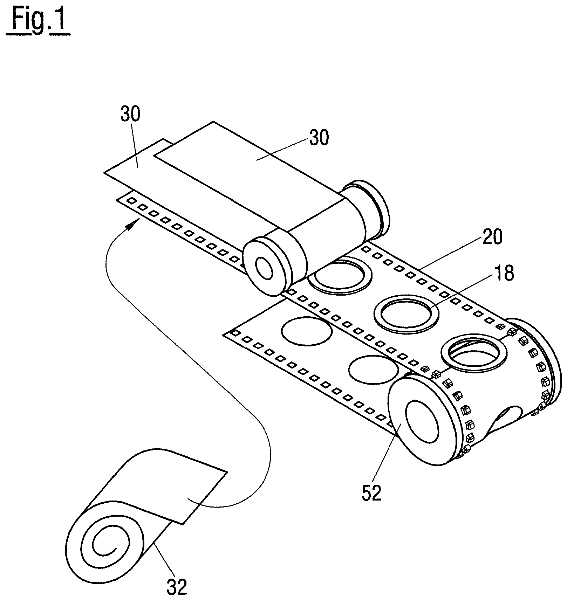

Wie aus der Fig. 1 ersichtlich, weist das Trägerband 20 die Form eines, die hier ringförmigen Klebstoffdepots 18 tragenden und mit einer abziehbaren Schutzfolie 30 versehenen, abgedeckten Bandes auf, das zum Beispiel von einem Wickel 32 abgewickelt wird.

Die Führungseinrichtung umfasst gemäß Anspruch 1 ein drehbares Rad 34 (Figs. 3, 4 und 5) mit Aufnahmen 36 für die Funktionselemente 10, das die Funktionselemente 10 von der Führungsbahn 22 (Fig. 2) dadurch übernimmt, dass die oberhalb der Flansche 41 der Funktionselemente 10 angeordneten zylindrischen Vorsprünge 43 je in eine Aufnahme 36 aufgenommen wird. Die Aufnahmen sind entsprechend der Formgebung der Funktionselemente bzw. Teilen davon zu gestalten und es sollte ausreichender Spielraum zur Verfügung stehen, dass die Funktionselemente einerseits ordentlich geführt sind, andererseits bei der Umlaufbewegung tangential freigegeben werden, wie unten näher beschrieben.

Die Führungsbahn 22 ist in Fig. 2 durch die kanalförmige Zuführeinrichtung 24 gebildet, die in Fig. 2 nur verkürzt dargestellt ist. In der Tat erstreckt sich die Zuführeinrichtung üblicherweise von einem nicht gezeigten Sortier- und Fördergerät zu dem in Fig. 4 gezeigten Mundstück 40 und ist in dem offenen linken Stirnende 42 des Mundstücks, d.h. in dessen Einlaufseite, formangepasst befestigt. Die kanalförmige Führungsbahn 22 weist oben einen Schlitz 44 auf, in dem die zylindrischen Vorsprünge 43 der hier gezeigten Funktionselemente 10 geführt sind, dabei laufen die Flansche 41 und die zylindrische Vorsprünge 43 der Funktionselement im Führungskanal 22. Es sind auch andere Ausbildungen der Zuführeinrichtung 24 möglich, zum Beispiel kann diese durch einen Führungsschlauch oder durch eine Führungsschiene gebildet werden, je nach Form der zu transportierenden Funktionselemente 10. Die Funktionselemente 10 werden, wie dargestellt, in einer Kette aneinandergereiht der Führungseinrichtung 40 zugeführt.

Die Funktionselemente 10 können kontinuierlich dem Setzkopf 14 von einem Sortier- und Fördergerät, wie zum Beispiel aus der EP-C-864 396 bekannt, oder chargenweise aus einem Magazin, wie beispielsweise aus der EP-B-633825, Fig. 4 bekannt, zugeführt werden. Die entsprechenden Zuführeinrichtungen sind in der EP-C-864 396 beschrieben. Die Funktionselemente 10 können im Führungskanal 22 einander berührend entlang des Führungskanals 22 verschoben oder einzeln im Führungskanal 22 durch Luftstöße in Richtung des Setzkopfs 14befördert werden, wie zum Beispiel in der EP-B-633 825, Fig. 7, gezeigt ist.

Der in Fig. 5 gezeigte Setzkopf 14 entspricht in seinen Grundzügen im Wesentlichen einem an sich bekannten Setzkopf, wie zum Beispiel aus der EP-C- 755 749, insbesondere deren Figuren 25 bis 38D bekannt ist. Eine kurze Beschreibung der Auslegung des Setzkopfes wird am Ende dieser Beschreibung gegeben.

Es versteht sich, dass die Erfindung nicht auf eine bestimmte Bauart von Setzköpfen 14 oder der damit verwendeten Funktionselemente beschränkt ist, sondern es kommen alle an sich bekannten Setzköpfe und Funktionselemente in Frage, die bereits in der Industrie bekannt sind. Es ist lediglich wichtig, dass die Funktionselemente 10 eine Anlagefläche 12 aufweisen, die mit Klebstoff 18 versehen werden kann. Solche Anlageflächen 12 sind häufig ringförmig, weshalb die Klebstoffdepots auch eine entsprechende Ringform haben, zum Beispiel mit einem mittleren Loch, das den Nietabschnitt 46 aufnimmt. Die Klebstoffdepots 18 können aber eine andere Form haben, wenn die Form der Anlagefläche von einer Ringform abweicht oder wenn eine andere Formgebung der Klebstoffdepots 18 erwünscht ist.

Wie aus allen Figuren ersichtlich, wird das Trägerband 20 mit den Klebstoffdepots 18 vor dem Setzkopf 14 mit einem vom Klebstoff abziehbaren Abdeckband 30 abgedeckt. Das Abdeckband ist über eine Umlenkrolle 48 vom Trägerband 20 trennbar.

Dabei ist, wie aus der Fig.4 ersichtlich, die Umlenkrolle 48 oberhalb des Trägerbandes 20, unterhalb einer die Funktionselemente 10 zur Führungseinrichtung führende Zuführeinrichtung 24 und auf der Einlaufseite 42 des Mundstücks 40 angeordnet.

Das Trägerband 20 selbst wird nach unten um eine Umlenkrolle 52 abgeführt und kann wieder aufgewickelt (nicht gezeigt) und wieder verwendet werden. Die Umlenkrolle 52 befindet sich in einem Ausschnitt 54 des die Führungseinrichtung umfassenden Mundstücks 40 (in Fig. 4 ersichtlich) und ist so angeordnet, dass die Funktionselemente 10 tangential zur Oberfläche der Umlenkrolle 52 des Trägerbands 20 unmittelbar auf einer Führungsschiene 50 des Mundstücks 40 bewegbar sind, deren Endstück 60 in Fig. 4 ersichtlich ist. Der Trägerband 20 ist vorzugsweise mit seitlichen Perforationen 56 ähnlich eines photographischem Filmes versehen, in die seitlich angeordnete Nasen 58 der Umlenkrolle 52 eingreifen die den Transport des Trägerbandes 20 sicherstellen und mit den Positionen der Nietabschnitte der Funktionselemente synchronisieren.

Das Trägerband 20 weist eine Reihe von in gleichen Abständen angeordneten Löchern auf, in die die Nietabschnitte 46 der Funktionselemente 10 bei der Anbringung der Klebstoffdepots 18 auf die Anlageflächen 16 der Funktionselemente eintauchen können. Ggf. bei langen Nietabschnitten können auch entsprechende Öffnungen in der Oberfläche der Umlenkrolle 52 vorgesehen werden.

Die Darstellung der Fig. 4 ist so zu verstehen, dass das Endstück 60 der Führungsschiene einen geschlossenen Boden 64 aufweist.

Wie bereits erwähnt, ist das Mundstück 40 der Führungseinrichtung mittels einer bewegbaren Rastnase 66, die mittels eines Handhebels 68 betätigt werden kann, lösbar mit dem Setzkopf 14 verbunden. Dabei greift die zylinderstiftförmige Rastnase 66 in die Bohrung 70 des Mundstücks 40 ein.

Konkret weist die Oberseite des Mundstücks 40 die Bohrung 70 auf, in die eine zylindrische mit Federkraft nach unten vorgespannte Rastnase 66 einrastet und so das Trennen des Mundstücks 40 vom Setzkopf 14 verhindert. Die Rastnase 66 geht über eine Ringschulter 74 in einen Bolzen 76 größeren Durchmessers über, die gegen die Oberseite des Mundstücks 40 drückt und somit die Position der Rastnase 66 im Eingriff mit dem Mundstück 40 bestimmt. Der Handhebel 68 kann vom Bediener betätigt werden, um die Rastnase 66 nach oben zu ziehen, wodurch das Mundstück 40 bei Bedarf aus dem Setzkopf 14 nach links herausgezogen werden kann. Das Mundstück 40 kann einfach in die entsprechende Aufnahme des Setzkopfes 14 eingeschoben werden und drückt den Bolzen 76 mit der Rastnase 66 nach oben. Sobald das Mundstück 40 vollständig in die entsprechende Aufnahmeposition gemäß Fig. 5 gelangt ist, springt der federvorgespannte Bolzen 76 mit der Rastnase 66 nach unten in die in Fig. 5 gezeigte, eingerastete Position.

In der gezeigten Anordnung ist die Vorrichtung ausgelegt (wie aus Fig. 5 ersichtlich), um nach der Anbringung des Klebstoffs 18 auf ein Funktionselement 10 dieses in vier aufeinanderfolgende Wartepositionen zu bringen, bevor sie in die Setzposition unterhalb des Stempels 72 des Setzkopfes gelangen.

Dies ist allerdings nicht notwendig. Es sind durchaus verkürzte Versionen des Mundstücks 40 denkbar, bei denen die Funktionselemente 10 in weniger Wartepositionen oder gar unmittelbar in die Setzposition, d.h. sofort in den Stempelkanal 75 des Setzkopfes unterhalb des Stempels 72 verschoben werden.

Das Verfahren zur Anbringung von Funktionselementen 10, z.B. aus Metall an einem Bauteil 12, insbesondere an einem aus faserverstärktem Kunststoff bestehenden Bauteil, unter Anwendung eines Setzkopfes 14, wobei das Funktionselement 10 eine mit Klebstoff versehene Anlagefläche 16 aufweist, und der Klebstoff in einzelnen den Funktionselementen 10 angepassten Depots 18 auf einem Trägerband 20 dem Setzkopf 14 zugeführt wird, bzw. die Wirkungsweise der Vorrichtung kann wie folgt zusammengefasst werden:
Die Funktionselemente 10 werden von einer Zuführeinrichtung 24 an eine Führungseinrichtung 26 geliefert und jeweils in der Führungseinrichtung 26 an ein Klebstoffdepot 18 gedrückt. Sie werden anschließend mit den anhaftenden Klebstoffdepots 18 und getrennt vom Trägerband 20 in dem Setzkopf 14 in eine Setzposition vor einen Setzstempel 72 geführt.

Bei diesem Verfahren umfasst die Führungseinrichtung ein drehbares Rad 34, das die Anlageflächen 16 der Funktionselemente 10 an die Klebstoffdepots 18 drückt.

Das Trägerband 20 wird nach unten um eine Umlenkrolle 52 abgeführt, die sich in einem Ausschnitt 54 eines die Führungseinrichtung umfassenden Mundstücks 40 befindet und vorzugsweise so angeordnet ist, dass die Funktionselemente 10 tangential zur Oberfläche der Umlenkrolle 52 des Trägerbands 20 unmittelbar auf einer Führungsschiene 50 des Mundstücks 40 bzw. auf dessen Boden 64 bewegt werden.

Das Trägerband 20 mit den Klebstoffdepots 18 ist vor dem Setzkopf 14 bzw. vor dem Mundstück 40 mit einem vom Klebstoff abziehbaren Abdeckband 30 abgedeckt, das über eine Umlenkrolle 31 vom Trägerband 20 abgezogen wird.

Der Setzkopf 14 weist wie üblich ein Befestigungsteil 80 auf, das mittels nicht gezeigter Schrauben in einem Werkzeug 81 einer Presse oder an einer Hand eines Roboters befestigt ist. Der Stempel 72 ist über einen Bolzen 82 fest mit dem Befestigungsteil 80 des Setzkopfes 14 verbunden, d.h. er bewegt sich gegenüber diesem Teil nicht. Ferner besteht der Setzkopf 14 aus einem unteren Teil 84, der das Mundstück 40 trägt und in diesem Beispiel mittels Federkraft nach unten vorgespannt ist. Die Vorspannfeder ist nicht gezeigt, befindet sich aber in diesem Beispiel innerhalb einer Bohrung 92 eines Führungsbolzens 86 und stützt sich einerseits am Werkzeug 81 der Presse, an dem das Befestigungsteil 80 des Setzkopfes 14 angebracht ist und andererseits an einem kolbenartigen Anschlag 90 ab, der am oberen Ende des Bolzens 76 angeordnet ist. Der kolbenartige Anschlag 90 ist innerhalb der Bohrung 92 des Führungsbolzens86 zur Lösung der Rastnase 66 beschränkt gleitbar und drückt gegen ein unteres Ende des Führungsbolzens 86. Der Führungsbolzen 86 ist mit dem unteren Teil 84 des Setzkopfes verbunden und in einen Führungszylinder 88 des oberen Befestigungsteils 80 axial gleitbar.

Der untere Teil 84 des Setzkopfes wird bei geöffneter Presse so weit vom Befestigungsteil nach unten geschoben, dass ein Funktionselement 10 horizontal nach rechts in den Stempelkanal 75 vor, d.h. unterhalb des unteren Endes des Stempels 72 geschoben werden kann. Wie ersichtlich ist das untere Ende es Stempels 72 mit einer Aufnahme für den oberen Teil des Funktionselements versehen, wobei diese Aufnahme entsprechend der Form des Funktionselement zu wählen ist.

Der untere Teil 84 des Setzkopfes wird einerseits durch den Stempel 72 geführt, der in den Stempelkanal 75 geführt ist und andererseits durch den Führungsbolzen 86 geführt, der in dem Führungszylinder 88 des Befestigungsteils 80 gleitbar angeordnet ist.

Wenn die Presse schließt oder der Roboter den Setzkopf 14 an das Bauteil 12 presst, weicht das untere Teil 74 des Setzkopfes in Richtung des Befestigungsteils 80 des Setzkopfes aus. Diese Bewegung spannt die sich in der Führungsbohrung 92 befindende Feder, und das Funktionselement unterhalb des unteren Endes des Stempels 72 wird an der vorgesehenen Position am Bauteil 42 angebracht.

Bei jedem Öffnungshub der Presse wird ein neues Funktionselement 10, das mit dem Klebstoff 18 versehen ist, durch den auf die Kette von Funktionselementen ausgeübten Druck in die Setzposition vor dem Setzstempel 72 gebracht, ein weiteres ebenfalls bereits mit Klebstoff versehenes Funktionselement 10 in eine Warteposition gebracht, und ein neues Funktionselement 10 in Berührung mit einem Klebstoffring 18 gebracht. Bei dem sich anschließenden Schließhub der Presse wird das sich in der Setzposition befindende Funktionselement 10 mittels des Setzstempels 72 an dem Bauteil 12 angebracht, die Presse öffnet sich wieder, und der unmittelbar oben beschriebene Zyklus wiederholt sich bei jedem Öffnungshub der Presse. Dabei wird das drehbare Rad mit jedem Hub der Presse mit dem gleichen Takt um eine Position weitergedreht.

Es kann sich bei dem Klebstoff um handelsübliche Ein- oder Zweikomponenten-Klebstoffe handeln, die in der Automobilindustrie üblich sind. Auch können die Klebstoffarten verwendet werden, die in der eingangs genannten EP 2 439 055-A genannt sind.

Typische Arten von zwei- (oder mehr)komponentigen und einkomponentigen Systemen sind: Cyanacrylat-Klebstoffe, Methylmethacrylat--Klebstoffe, anaerob härtende Klebstoffe, strahlenhärtende Klebstoffe, Phenol-Formaldehydharz-Klebstoffe, Epoxidharz-Klebstoffe und Polyurethan-Klebstoffe.

Es können auch Klebstoffdepots bzw. -ringe 18 aus einem doppelseitigen Klebeband oder in Form eines Transferklebstoffs verwendet werden.

### Bezugszeichenliste

- 10: Funktionselement
- 12: Bauteil
- 14: Setzkopf
- 16: Anlagefläche
- 18: Klebstoffdepot
- 20: Trägerband
- 22: Führungsbahn, Führungskanal
- 24: Zuführeinrichtung
- 26: Führungseinrichtung
- 30: Abdeckband, Schutzfolie
- 32: Wickel
- 34: drehbares Rad
- 36: Aufnahmen
- 40: Mundstück
- 41: Flansch der Funktionselemente 10
- 42: Einlaufseite des Mundstücks 40
- 43: zylindrischer Vorsprung der Funktionselemente 10
- 44: Schlitz des Führungskanals 24
- 46: Nietabschnitt der Funktionselemente 10
- 48: Umlenkrolle für das Abdeckband 30
- 50: Führungsschiene des Mundstücks
- 52: Umlenkrolle
- 54: Ausschnitt der Führungseinrichtung
- 56: Perforationen des Trägerbands 20
- 58: Nasen der Umlenkrolle 52
- 60: Endstück des Mundstücks 40
- 64: Boden des Endstücks 60 des Mundstücks 40
- 66: Rastnase
- 68: Handhebel zur Betätigung der Rastnase 66
- 70: Bohrung des Endstücks 60 des Mundstücks 40
- 72: Stempel
- 74: Ringschulter
- 75: Stempelkanal
- 76: Bolzen, Bereich des Bolzens mit größerem Durchmesser
- 80: Befestigungsteil des Setzkopfes 14
- 81: Werkzeug
- 82: Bolzen zur Befestigung des Stempels 72 mit dem Befestigungsteil 80
- 84: unteresTeil des Setzkopfes 14
- 86: Führungsbolzen für das untere Teil 84 des Setzkopfes 14
- 88: Führungsbohrung für den Führungsbolzen 86,
- 90: kolbenartiger Anschlag des Bolzens 76
- 92: Bohrung des Führungsbolzens 86
- I: Pfeilrichtung

## Patentansprüche

1. Vorrichtung zur Anbringung von Funktionselementen (10), z.B. aus Metall an einem Bauteil (12), insbesondere an einem aus faserverstärktem Kunststoff bestehenden Bauteil, unter Anwendung eines Setzkopfes (14), wobei die Funktionselemente (10) jeweils eine mit Klebstoff versehbare Anlagefläche (16) aufweisen und der Klebstoff in einzelnen den Funktionselementen angepassten Depots (18) auf einem Trägerband (20) dem Setzkopf (14) zuführbar ist, wobei eine bewegliche Einrichtung die mit Klebstoff versehenen Funktionselemente (10) vom Trägerband übernimmt und auf einer Führungsschiene (50) dem Setzkopf (14) zuspeist,
**dadurch gekennzeichnet,**
**dass** die Funktionselemente (10) mittels der beweglichen Einrichtung von einer vor dem Setzkopf (14) angeordneten Führungseinrichtung (26) übernommen und jeweils an einem vom Trägerband (20) getragenen Klebstoffdepot (18) drückbar sind und anschließend mit den anhaftenden Klebstoffdepots (18) mittels der beweglichen Einrichtung und getrennt vom Trägerband (20) auf der in einem lösbaren Mundstück (40) des Setzkopfes gebildeten Führungsschiene (50) dem Setzkopf (14) zu einer Setzposition vor einen Setzstempel (72) zuführbar sind, und dass die bewegliche Einrichtung entweder durch ein drehbares Rad (34) mit Aufnahmen (36) für die Funktionselemente (10) gebildet ist, das die Funktionselemente unmittelbar von der Führungseinrichtung (26) übernimmt, an die vom Trägerband getragenen Klebstoffdepots (18) drückt und unmittelbar auf die Führungsschiene des Mundstücks (40) fördert, oder dass die beweglichen Einrichtung einen umlaufenden Förderer mit Aufnahmen für die Funktionselemente (10) umfasst, der die Funktionselemente (10) unmittelbar von der Führungseinrichtung (26) übernimmt, an die vom Trägerband (20) getragenen Klebstoffdepots (18) drückt und unmittelbar auf die Führungsschiene (50) des Mundstücks (40) fördert.

2. Vorrichtung nach Anspruch 1,
**dadurch gekennzeichnet,**
**dass** die Führungsbahn (22) durch einen Führungskanal oder durch einen Führungsschlauch oder durch eine Führungsschiene gebildet ist.

3. Vorrichtung nach Anspruch 1 oder 2,
**dadurch gekennzeichnet,**
**dass** die Funktionselemente (10) aneinandergereiht der Führungseinrichtung (26) zuführbar sind.

4. Vorrichtung nach einem der vorhergehenden Ansprüche,
**dadurch gekennzeichnet,**
**dass** das Trägerband (20) mit den Klebstoffdepots (18) vor dem Setzkopf (14) mit einem vom Klebstoff abziehbaren Abdeckband (30) abgedeckt ist, insbesondere wobei das Abdeckband (30) über eine Umlenkrolle (48) vom Trägerband (20) trennbar ist.

5. Vorrichtung nach Anspruch 4,
**dadurch gekennzeichnet,**
**dass** die Umlenkrolle (48) oberhalb des Trägerbandes (20), unterhalb einer die Funktionselemente (10) zur Führungseinrichtung (26) führende Zuführeinrichtung (24) und auf der Einlaufseite (42) vor dem die Führungsschiene (50) aufweisenden Mundstücks (40) angeordnet ist.

6. Vorrichtung nach einem der vorhergehenden Ansprüche,
**dadurch gekennzeichnet,**
**dass** das Trägerband (20) nach unten um eine Umlenkrolle (52) abführbar ist, die sich in einem Ausschnitt (54) eines die Führungsschiene (50) aufweisenden Mundstücks (40) befindet und vorzugsweise so angeordnet ist, dass die Funktionselemente (10) tangential zur Oberfläche der Umlenkrolle (52) des Trägerbands (20) unmittelbar auf die Führungsschiene (50) des Mundstücks (40) bewegbar sind.

7. Vorrichtung nach einem der vorhergehenden Ansprüche,
**dadurch gekennzeichnet,**
**dass** die Klebstoffdepots (18) und/oder das Trägerband (20) so ausgebildet sind bzw. ist, dass die Klebstoffdepots (18) weniger stark an dem Trägerband (20) als an den Funktionselementen (10) haften.

8. Vorrichtung nach einem der vorhergehenden Ansprüche,
**dadurch gekennzeichnet,**
**dass** das Mundstück (40) der Führungseinrichtung (26) mittels einer bewegbaren Rastnase (66) lösbar mit dem Setzkopf (14) verbunden ist.

9. Vorrichtung nach einem der vorhergehenden Ansprüche
**dadurch gekennzeichnet,**
**dass** das drehbare Rad (34) bzw. der umlaufende Förderer von dem auf die Funktionselemente ausgeübten Druck zum Drehen bzw zum Umlauf bringbar ist, ohne einen separaten Antrieb für das drehbare Rad bzw. den umlaufenden Förderer vorzusehen.

10. Vorrichtung nach einem der vorhergehenden Ansprüche1 bis 8
**dadurch gekennzeichnet,**
**dass** das drehbare Rad (34) bzw. der umlaufende Förderer mittels eines Schrittmotors entsprechend den Huben des Setzkopfes antreibbar ist.

11. Vorrichtung nach einem der vorhergehenden Ansprüche,
**dadurch gekennzeichnet,**
**dass** ein Spülsystem im Setzkopf integriert ist, um Klebstoffreste bei Bedarf aus dem Setzkopf auszuspülen.

12. Verfahren zur Anbringung von Funktionselementen (10), z.B. aus Metall an einem Bauteil (12), insbesondere an einem aus faserverstärktem Kunststoff bestehenden Bauteil, unter Anwendung der Vorrichtung nach einem der vorhergehenden Ansprüche, wobei das Funktionselement (10) eine mit Klebstoff versehene Anlagefläche (16) aufweist, und der Klebstoff in einzelnen den Funktionselementen angepassten Depots (18) auf einem Trägerband (20) dem Setzkopf (14) zugeführt wird,
**dadurch gekennzeichnet,,**
**dass** die Funktionselemente (10) von einer Zuführeinrichtung (24) an eine Führungseinrichtung (26) geliefert werden, mittels der Aufnahmen (36) des drehbaren Rads (34) oder des umlaufenden Förderers unmittelbar von der Führungseinrichtung (26) übernommen, jeweils an ein vom Trägerband getragenes Klebstoffdepot (18) gedrückt und mit den anhaftenden Klebstoffdepots (18) und getrennt vom Trägerband (20) unmittelbar auf die Führungsschiene (50) des Mundstücks (40) und anschließend in den Setzkopf (14) in eine Setzposition vor einen Setzstempel (72) geführt werden.

13. Verfahren nach Anspruch 12,
**dadurch gekennzeichnet,**
**dass** das Trägerband (20) nach unten um eine Umlenkrolle (52) abgeführt wird, die sich in einem Ausschnitt (54) des Mundstücks (40) befindet und vorzugsweise so angeordnet ist, dass die Funktionselementen (10) tangential zur Oberfläche der Umlenkrolle (52) des Trägerbands bzw. des drehbaren Rades (34) unmittelbar auf einer Führungsschiene (50) des Mundstücks bewegt werden.

14. Verfahren nach einem der Ansprüche 12 oder 13,
**dadurch gekennzeichnet,**
**dass** das Trägerband (20) mit den Klebstoffdepots (18) vor dem Setzkopf (14) mit einem vom Klebstoff abziehbaren Abdeckband (30) abgedeckt ist, das über eine Umlenkrolle (48) vom Trägerband (20) abgezogen wird.

## Claims

1. An apparatus for the attachment of functional elements (10), for example of metal, to a component (12), in particular to a component consisting of fiber-reinforced plastic, using a setting head (14), wherein the functional elements (10) each have a contact surface (16) which can be provided with an adhesive and the adhesive can be supplied to the setting head (14) in individual deposits (18) adapted to the functional elements on a carrier band (20), wherein a movable device takes over the functional elements (10) provided with adhesive from the carrier band and feeds them on a guide rail (50) to the setting head (14),
**characterized in that**
the functional elements (10) are taken over by means of the movable device from a guide device (26) arranged in front of the setting head (14) and can each be pressed against an adhesive deposit (18) carried by the carrier band (20) and can subsequently be supplied with the adherent adhesive deposits (18) by means of the movable device and separately from the carrier band (20) on the guide rail (50), which is formed in a releasable mouth piece (40) of the setting head, to the setting head (14) to a setting position in front of a setting die (72); and **in that** the movable device is either formed by a rotatable wheel (34) with mounts (36) for the functional elements (10) which takes over the functional elements directly from the guide device (26), which presses them against the adhesive deposits (18) carried by the carrier band and which directly conveys them onto the guide rail of the mouth piece (40); or **in that** the movable device includes a circulating conveyor with mounts for the functional elements (10) which takes over the functional elements (10) directly from the guide device (26), which presses them against the adhesive deposits (18) carried by the carrier band (20) and which directly conveys them onto the guide rail (50) of the mouth piece (40).

2. An apparatus in accordance with claim 1,
**characterized in that**
the guide track (22) is formed by a guide channel or by a guide hose or by a guide rail.

3. An apparatus in accordance with claim 1 or claim 2,
**characterized in that**
the functional elements (10) can be supplied in a row to the guide device (26).

4. An apparatus in accordance with any one of the preceding claims, **characterized in that**
the carrier band (20) with the adhesive deposits (18) is covered in front of the setting head (14) by a cover band (30) which can be drawn off from the adhesive, in particular with the cover band (30) being able to be separated from the carrier band (20) via a deflection roller (48).

5. An apparatus in accordance with claim 4,
**characterized in that**
the deflection roller (48) is arranged above the carrier band (20), beneath a supply device (24) which leads the functional elements (10) to the guide device (26), and at the inlet side (42) in front of the mouth piece (40) having the guide rail (50).

6. An apparatus in accordance with any one of the preceding claims, **characterized in that**
the carrier band (20) can be led off downwardly around a deflection roller (52) which is located in a cut-out (54) of a mouth piece (40) having the guide rail (50) and which is preferably arranged such that the functional elements (10) can be moved tangentially to the surface of the deflection roller (52) of the carrier band (20) directly onto the guide rail (50) of the mouth piece (40).

7. An apparatus in accordance with any one of the preceding claims,
**characterized in that**
the adhesive deposits (18) and/or the carrier band (20) are/is formed such that the adhesive deposits (18) adhere less strongly to the carrier band (20) than to the functional elements (10).

8. An apparatus in accordance with any one of the preceding claims,
**characterized in that**
the mouth piece (40) of the guide device (26) is releasably connected to the setting head (14) by means of a movable latching nose (66).

9. An apparatus in accordance with any one of the preceding claims,
**characterized in that**
the rotatable wheel (34) of the circulating conveyor can be brought to rotation or circulation by the pressure exerted on the functional elements without providing a separate drive for the rotatable wheel or the circulating conveyor.

10. An apparatus in accordance with any one of the preceding claims 1 to 8,
**characterized in that**
the rotatable wheel (34) or the circulating conveyor can be driven by means of a stepping motor in accordance with the strokes of the setting head.

11. An apparatus in accordance with any one of the preceding claims,
**characterized in that**
a flushing system is integrated into the setting head in order to flush adhesive residues from the setting head if required.

12. A method for attaching functional elements (10), for example of metal, to a component (12), in particular to a component consisting of fiber-reinforced plastic using the apparatus in accordance with any one of the preceding claims, wherein the functional element (10) has a contact surface (16) provided with adhesive and the adhesive is supplied in individual deposits (18) adapted to the functional elements on a carrier band (20) to the setting head (14), **characterized in that**
the functional elements (10) are delivered from a supply device (24) to a guide device (26), are taken over by means of the mounts (36) of the rotatable wheel (34) or of the circulating conveyor directly from the guide device (26), are each pressed against an adhesive deposit (18) carried by the carrier band and are led with the adherent adhesive deposits (18) and separately from the carrier band (20) directly onto the guide rail (50) of the mouth piece (40) and subsequently into the setting head (14) into a setting position in front of the setting die (72).

13. A method in accordance with claim 12,
**characterized in that**
the carrier band (20) is led away downwardly around a deflection roller (52) which is located in a cut-out (54) of the mouth piece (40) and which is preferably arranged such that the functional elements (10) are moved tangentially to the surface of the deflection roller (52) of the carrier band or of the rotatable wheel (34) directly on a guide rail (50) of the mouth piece.

14. A method in accordance with one of the claims 12 or 13,
**characterized in that**
the carrier band (20) with the adhesive deposits (18) is covered in front of the setting head (14) by a cover band (30) which can be drawn off from the adhesive and which is drawn off from the carrier band (20) via a deflection roller (48).

## Revendications

1. Dispositif pour monter des éléments fonctionnels (10), par exemple en métal, sur un composant (12), en particulier sur un composant constitué de matière plastique renforcée par des fibres, en utilisant une tête de pose (14),
dans lequel
les éléments fonctionnels (10) présentent chacun une surface d'appui (16) pourvue de colle, et la colle peut être amenée à la tête de pose (14) dans des dépôts individuels (18) situés sur une bande porteuse (20) et adaptés aux éléments fonctionnels, et
un moyen mobile reprend les éléments fonctionnels (10), pourvus de colle, depuis la bande porteuse et les amène à la tête de pose (14) sur un rail de guidage (50),
**caractérisé en ce que**
à l'aide du moyen mobile, les éléments fonctionnels (10) sont repris par un moyen de guidage (26) disposé en amont de la tête de pose (14) et peuvent être pressés chacun contre un dépôt de colle (18) porté par la bande porteuse (20), et ensuite, à l'aide du moyen mobile et séparément de la bande porteuse (20), ils peuvent être amenés, ensemble avec les dépôts de colle (18) adhérant, à la tête de pose (14) vers une position de pose devant un poinçon de pose (72), en étant situés sur le rail de guidage (50) formé dans une pièce formant embouchure amovible (40) de la tête de pose, et **en ce que**
soit le moyen mobile est formé par une roue rotative (34) ayant des logements (36) pour les éléments fonctionnels (10), qui reprend les éléments fonctionnels directement depuis le moyen de guidage (26), les presse contre les dépôts de colle (18) portés par la bande porteuse et les transporte directement jusque sur le rail de guidage de la pièce formant embouchure (40), soit le moyen mobile comprend un convoyeur en révolution ayant des logements pour les éléments fonctionnels (10), qui reprend les éléments fonctionnels (10) directement depuis le moyen de guidage (26), les presse contre les dépôts de colle (18) portés par la bande porteuse (20) et les transporte directement jusque sur le rail de guidage (50) de la pièce formant embouchure (40).

2. Dispositif selon la revendication 1,
**caractérisé en ce que**
la voie de guidage (22) est formée par un canal de guidage ou par un tuyau de guidage ou par un rail de guidage.

3. Dispositif selon la revendication 1 ou 2,
**caractérisé en ce que**
les éléments fonctionnels (10) peuvent être amenés au moyen de guidage (26) en étant juxtaposés.

4. Dispositif selon l'une des revendications précédentes,
**caractérisé en ce que**
en amont de la tête de pose (14), la bande porteuse (20) avec les dépôts de colle (18) est recouverte d'une bande de recouvrement (30) pouvant être retirée de la colle, en particulier la bande de recouvrement (30) pouvant être séparée de la bande porteuse (20) par l'intermédiaire d'une poulie de renvoi (48).

5. Dispositif selon la revendication 4,
**caractérisé en ce que**
la poulie de renvoi (48) est disposée au-dessus de la bande porteuse (20), au-dessous d'un moyen d'alimentation (24) guidant les éléments fonctionnels (10) vers le moyen de guidage (26) et, sur le côté entrée (42), devant la pièce formant embouchure (40) présentant le rail de guidage (50).

6. Dispositif selon l'une des revendications précédentes,
**caractérisé en ce que**
la bande porteuse (20) peut être redirigée vers le bas autour d'une poulie de renvoi (52) qui se trouve dans une découpe (54) d'une pièce formant embouchure (40) présentant le rail de guidage (50) et qui est de préférence disposée de telle sorte que les éléments fonctionnels (10) peuvent être déplacés tangentiellement à la surface de la poulie de renvoi (52) de la bande porteuse (20) directement jusque sur le rail de guidage (50) de la pièce formant embouchure (40).

7. Dispositif selon l'une des revendications précédentes,
**caractérisé en ce que**
les dépôts de colle (18) et/ou la bande porteuse (20) sont formés ou est formée de telle sorte que les dépôts de colle (18) adhèrent moins fortement à la bande porteuse (20) qu'aux éléments fonctionnels (10).

8. Dispositif selon l'une des revendications précédentes,
**caractérisé en ce que**
la pièce formant embouchure (40) du moyen de guidage (26) est reliée de manière amovible à la tête de pose (14) par l'intermédiaire d'un ergot d'enclenchement mobile (66).

9. Dispositif selon l'une des revendications précédentes,
**caractérisé en ce que**
la roue rotative (34) ou le convoyeur en révolution peut être mis(e) en rotation ou en révolution par la pression exercée sur les éléments fonctionnels, sans prévoir d'entraînement séparé pour la roue rotative ou pour le convoyeur en révolution.

10. Dispositif selon l'une des revendications précédentes 1 à 8,
**caractérisé en ce que**
la roue rotative (34) ou le convoyeur en révolution peut être entraîné(e) à l'aide d'un moteur pas-à-pas en correspondance des courses de la tête de pose.

11. Dispositif selon l'une des revendications précédentes,
**caractérisé en ce que**
un système de rinçage est intégré dans la tête de pose afin d'évacuer les résidus de colle de la tête de pose, si nécessaire.

12. Procédé pour monter des éléments fonctionnels (10), par exemple en métal, sur un composant (12), en particulier sur un composant en matière plastique renforcée par des fibres, en utilisant le dispositif selon l'une des revendications précédentes, l'élément fonctionnel (10) présentant une surface d'appui (16) pourvue de colle, et la colle étant amenée à la tête de pose (14) dans des dépôts individuels (18) situés sur une bande porteuse (20) et adaptés aux éléments fonctionnels,
**caractérisé en ce que**
les éléments fonctionnels (10) sont livrés par un moyen d'alimentation (24) à un moyen de guidage (26), sont repris directement par le moyen de guidage (26) à l'aide des logements (36) de la roue rotative (34) ou du convoyeur en révolution, sont chacun pressés contre un dépôt de colle (18) porté par la bande porteuse, et sont guidés, conjointement avec les dépôts de colle (18) adhérents et séparément de la bande porteuse (20), directement jusque sur le rail de guidage (50) de la pièce formant embouchure (40) et ensuite jusque dans la tête de pose (14) dans une position de pose devant un poinçon de pose (72).

13. Procédé selon la revendication 12,
**caractérisé en ce que**
la bande porteuse (20) est redirigée vers le bas autour d'une poulie de renvoi (52) qui se trouve dans une découpe (54) de la pièce formant embouchure (40) et qui est de préférence disposée de telle sorte que les éléments fonctionnels (10) sont déplacés tangentiellement à la surface de la poulie de renvoi (52) de la bande porteuse ou de la roue rotative (34) directement sur un rail de guidage (50) de la pièce formant embouchure.

14. Procédé selon l'une des revendications 12 ou 13,
**caractérisé en ce que**
en amont de la tête de pose (14), la bande porteuse (20) avec les dépôts de colle (18) est recouverte d'une bande de recouvrement (30) pouvant être retirée de la colle, qui est retirée de la bande porteuse (20) par l'intermédiaire d'une poulie de renvoi (48).
